# EUROPEAN PATENT APPLICATION

(11) **EP 4 838 833 A1**
(43) Date of publication of application: **11.11.2026**
(21) Application number: 26170160.1
(22) Date of filing: 01.04.2026
(51) Int. Cl.: H04L 9/08, H04B 10/70

(54) **METHOD AND SYSTEM FOR QUANTUM KEY DISTRIBUTION**

(30) Priority: 06.05.2025 EP 25174368
(71) Applicant: Terra Quantum AG, 9000 St. Gallen (CH)
(72) Inventor: Kodukhov, Aleksei, 9000 St. Gallen (CH); Pastushenko, Valeriia, 9000 St. Gallen (CH); Semenov, Vladimir, 9000 St. Gallen (CH); Zemlianov, Vladislav, 9000 St. Gallen (CH); Kozliuk, Dmitrii, 9000 St. Gallen (CH); Vinokur, Valerii, 9000 St. Gallen (CH)
(74) Representative: Flentje, Hanno Alexander Peter

(57) **Abstract**

A method for quantum key distribution is provided in a system which comprises a first data processing device (10a) and a second data processing device (10b). the method comprises: transmitting a first optical pulse (12) via an optical quantum channel (11) from the first data processing device (10a) to the second data processing device (10b); transmitting second optical pulses (14) from the first data processing device (10a) to the second data processing device (1ob) via the optical quantum channel (11) and subsequent to transmitting the first optical pulse (12), wherein the second optical pulses (14) comprise information for quantum key distribution and wherein an intensity of the first optical pulse (12) is greater than intensities of the second optical pulses (14); and receiving backscattered radiation (15) which is backscattered from the first optical pulse (12) during propagation of the first optical pulse (12) through the optical quantum channel (11). The optical quantum channel (11) further comprises a restricted access section (31) adjacent to the second data processing device (10b), the restricted access section (31) having a path length being at least half of a path distance between the first optical pulse (12) and a last of the second optical pulses (14).

## Description

### Technical Field

The present disclosure refers to a method and a system for quantum key distribution.

### Background

For increasing security in quantum key distribution (QKD), physical losses along the employed quantum channel may be monitored with the aim of detecting eavesdropping interventions in the quantum channel (cf. N. Kirsanov, et al., Forty thousand kilometers under quantum protection, Scientific Reports, 13(1):8756, 2023; A. Kodukhov, et al., Boosting quantum key distribution via the end-to-end loss control, Cryptography, 7(3):38, 2023; N. Kirsanovet al, Loss control-based key distribution under quantum protection, Entropy, 26(6):437, 2024; A. Aliev, et al., Experimental demonstration of scalable quantum key distribution over a thousand kilometers, arXiv:2306.04599, 2023, and EP 4 047 861 A1). Such a loss control procedure comprises sending special test pulses through the transmission line, which have higher intensity compared to the intensity of signal (bit-encoding) states utilized for key distribution.

Still, in certain configurations, potential eavesdroppers may have the opportunity to intercept information without being readily detected.

### Summary

It is an object of the present disclosure to provide improved techniques for securely transmitting data via quantum key distribution, in particular in the context of controlling physical losses along the employed optical quantum channel.

For solving the problem, a method and a system for quantum key distribution are provided according to the independent claims. Further embodiments are disclosed in dependent claims.

According to one aspect, a method for quantum key distribution in a system which comprises a first data processing device and a second data processing device is provided, the method comprising:
- transmitting a first optical pulse via an optical quantum channel from the first data processing device to the second data processing device;
- transmitting second optical pulses from the first data processing device to the second data processing device via the optical quantum channel and subsequent to transmitting the first optical pulse, wherein the second optical pulses comprise information for quantum key distribution, wherein an intensity (and/or power) of the first optical pulse is greater than (average) intensities (and/or powers) of the second optical pulses; and
- receiving (in the first data processing device and/or in a backscatter detection device, preferably at a first data processing device end of the optical quantum channel) backscattered radiation which is backscattered from the first optical pulse during the propagation (passage, traversal) of the first optical pulse through the optical quantum channel.

Preferably, the optical quantum channel comprises a restricted access section (directly) adjacent to (and/or at and/or in) the second data processing device, preferably for (additional) generation of the backscattered radiation by the first optical pulse. More preferably, the restricted access section has a path length being at least half of a path distance between the first optical pulse and a last (second optical pulse) of the second optical pulses (in the optical quantum channel).

According to another aspect, a system for quantum key distribution is provided, the system comprising a first data processing device and a second data processing device and being configured to carry out said method.

With the proposed method, the second optical pulses may propagate continuously in portions of the optical quantum channel containing the backscattered radiation. Since an eavesdropper also alters the backscattered radiation when adjusting the amount of leakage, the legitimate users may, by the backscattered radiation, detect attacks in which the eavesdropper distinguishes between the first optical pulse and the second optical pulses and correspondingly adjusts and obfuscates the diverted fraction of the signal power. Such attacks may be detectable across the entire optical quantum channel since the provision of the restricted access section of the optical quantum channel prevents significant time gaps with no backscattered radiation. Hence, the legitimate users may more reliably estimate how much information may have been diverted and may adjust the subsequent key distribution, e.g., the privacy amplification, correspondingly.

The optical quantum channel may comprise an optical fiber (e.g., a silicon optical fiber). The path length may be a length along the optical quantum channel, in particular along the optical fiber. In other words, the path length may be an optical fiber length. The path distance may be a (physical) distance along the optical quantum channel, in particular along the optical fiber. The optical pulse propagation velocity may be (essentially) constant throughout the optical quantum channel, in particular throughout the optical fiber.

The optical quantum channel may extend between the first and the second data processing device. The optical quantum channel may further extend beyond the first and/or the second data processing device. The restricted access section may extend and/or be arranged (at least partially) between the first and the second data processing device and/or (at least partially) outside a portion (section) of the optical quantum channel between the first and the second data processing device.

The restricted access section may have at least a path length (for (additional) generation of the backscattered radiation by the first optical pulse) such that, between the first data processing device and the second data processing device or between the first data processing device and the restricted access section, the second optical pulses (continuously) propagate in segments (portions) of the optical quantum channel containing the backscattered radiation; and/or the restricted access section may have at least a path length (for (additional) generation of the backscattered radiation by the first optical pulse) such that during the propagation of the second optical pulses between the first data processing device and the second data processing device or between the first data processing device and the restricted access section, segments of the optical quantum channel containing the second optical pulses contain the backscattered radiation. The path length may be between half of and two times, preferably between half of the path distance and the path distance between the first optical pulse and the last of the second optical pulses.

The method may comprise determining the path length of the restricted access section, preferably as being at least half of the path distance between the first optical pulse and the last of the second optical pulses and/or such that, between the first data processing device and the second data processing device or between the first data processing device and the restricted access section, the second optical pulses (continuously) propagate in segments of the optical quantum channel containing the backscattered radiation. Additionally or alternatively, the second optical pulses may continuously propagate in the segments of the optical quantum channel containing the backscattered radiation in that a time gap of no backscattered radiation is less than 1 % (preferably less than 0.1 %, more preferably less than 0.05 %) of an (average) second optical pulse length and/or less than 0.1 ns, preferably less than 0.01 ns. In other words, the backscattered radiation may be (effectively) continuous, preferably by being free of time gaps of more than 1 % (preferably more than 0.1 %, more preferably more than 0.05 %) of the (average) second optical pulse length and/or by being free of time gaps of more than 0.1 ns, preferably more than 0.01 ns (during the propagation of the second optical pulses between the first data processing device and the second data processing device or between the first data processing device and the restricted access section).

Between the first data processing device and the second data processing device or between the first data processing device and the restricted access section, the second optical pulses may (continuously) propagate in segments (portions) of the optical quantum channel containing the backscattered radiation. The restricted access section may have a path length of at least a minimum path length proportional to a (first) time gap between the first optical pulse and a last (latest) of the second optical pulses and/or proportional to an optical pulse propagation velocity (group velocity of light in the optical quantum channel). In particular, the restricted access section may have a path length of at least half of a product of the optical pulse propagation velocity and the (first) time gap between the first optical pulse and the last of the second optical pulses.

In other words, the restricted access section may have a path length of at least $\frac{{v}_{f}}{2} \left(Δt+\left(n-1\right)Δτ\right)$ with optical pulse propagation velocity *v_{f}* and the time gap Δ*T* between the first optical pulse and the last of the second optical pulses. The (first) time gap Δ*T* may be determined depending on a (second) time gap Δ*t* between the first optical pulse and a first of the second optical pulses, a number (count) of second optical pulses *n,* and a third time gap Δ*t* between subsequent second optical pulses: Δ*T* = Δ*t* + (*n -* 1)*Δτ.* Thus, the (first) time gap may be determined as a sum of the second time gap and all third time gaps between subsequent second optical pulses.

In particular, the restricted access section may have a path length of at least $\frac{{v}_{f} Δ t}{2} + \left(n-1\right) \frac{{v}_{f} Δ τ}{2}$ with optical pulse propagation velocity *v_{f}*, (second) time gap Δ*t* between the first optical pulse and the first of the second optical pulses, number of second optical pulses *n*, and (third) time gap Δ*τ* between subsequent second optical pulses. The method may comprise determining the path length of the restricted access section in at least one way described above.

The restricted access section may comprise an optical fiber coil (optical fiber spool).

The restricted access section may be secured from external access, e.g., from an eavesdropper. In particular, the restricted access section may be arranged in the second data processing device. The restricted access section may be arranged in a housing and/or a region for which access, in particular physical access to the optical quantum channel, is restricted and/or detectable and/or controlled. In particular, the housing may be designed in such a way that access, in particular physical access to the optical quantum channel, is restricted and/or detectable and/or controlled.

The optical fiber coil may for example have a diameter between 0.1 m and 1.0 m and/or a width between 0.1 m and 1.0 m. The housing may be sized to accommodate the optical fiber coil. For example, the housing may have side lengths between 0.1 m and 1.5 m.

The second time gap (between the first optical pulse and the first of the second optical pulses) and/or the third time gap (between subsequent second optical pulses) may be between 1 ns and 1 µs, preferably between 10 ns and 100 ns, more preferably between 10 ns and 30 ns. The number of second optical pulses may for example be between 10 and 1000, preferably between 50 and 200. The third time gap may for example be between 10 ns and 1 ms, preferably between 0.5 µs and 5.0 µs. The first optical pulse may have a pulse length between 10 ns and 1 µs. The second optical pulses may have a pulse length between 0.5 ns and 5 ns. The first time gap and/or the second time gap and/or the third time gap may be between temporal means (centers) of optical pulses.

The method may comprise monitoring the backscattered radiation. The method may further comprise determining a diverted fraction of the signal power (power of the signal) by an eavesdropping device (and/or determining a presence of the eavesdropping device and/or determining an intrusion event) based on the backscattered radiation (received in the first data processing device and/or in the backscatter detection device).

The method may comprise aborting (terminating) determining of the shared key based on a determined leakage and/or based on the backscattered radiation. The method may comprise discarding the shared key based on the determined leakage and/or based on the backscattered radiation.

The fraction of (diverted) signal power (and/or the presence of the eavesdropping device) may be determined by optical time domain reflectometry (OTDR), in particular by at least one of Brillouin optical time domain reflectometry (B-OTDR) and coherent optical time domain reflectometry (C-OTDR).

The method may further comprise at least one of:
- in the second data processing device, routing the first optical pulse to a first branch of the optical quantum channel comprising the restricted access section;
- in the second data processing device, (subsequent to routing the first optical pulse to the first branch) routing the second optical pulses to a second branch of the optical quantum channel comprising an optical detector.

The backscattered radiation from the first optical pulse in the first branch may preferably be (continuously) routed towards the first data processing device, in particular towards at least one of the second optical pulses.

The first optical pulse and the second optical pulses may be routed by an optical switch and/or the backscattered radiation may be routed towards the first data processing device via a bypass branch (e.g., a bypass fiber segment) bypassing the optical switch (and/or bypassing an optical switch segment of the optical quantum channel containing the optical switch).

The optical switch may be arranged on the optical switch segment and/or between the first optical circulator and the second optical circulator. The optical switch segment and/or the bypass branch may be arranged between the first and the second optical circulator. The first optical circulator may be connected to at least one of: a section of the optical quantum channel between the first and the second data processing device, the optical switch segment, and the bypass branch. The second optical circulator may be connected to at least one of: the optical switch segment, the bypass branch, and the first branch. The optical switch may be connected to the second branch. A length of the optical switch segment may be between 1 mm and 1 m, preferably between 5 mm and 20 mm.

The first and/or the second optical circulator may have three ports. The first and/or the second optical circulator may be configured to route incoming pulses (and/or incoming radiation) to a next port in a clockwise direction or an anticlockwise direction. The first branch may be free of a measurement device (e.g., an optical detector) and/or free of a connection to a measurement device.

The backscattered radiation may be routed via the bypass branch by a first optical circulator and a second optical circulator (between which the optical switch and/or the bypass branch are arranged). The optical switch segment may have a path length such that the time gap of no backscattered radiation is less than 10 % (preferably less than 1 %) of an (average) second optical pulse length and/or less than 0.1 ns, preferably less than 0.01 ns.

The method may further comprise at least one of:
- transmitting a third optical pulse from the first data processing device to the second data processing device via the optical quantum channel and subsequent to transmitting the second optical pulses;
- transmitting, from the first data processing device to the second data processing device via the optical quantum channel and subsequent to transmitting the third optical pulse, fourth optical pulses comprising second information for quantum key distribution, wherein an intensity (and/or power) of the third optical pulse is greater than (average) intensities (and/or powers) of the fourth optical pulses; and
- receiving (in the first data processing device) second backscattered radiation which is backscattered from the third optical pulse during the propagation of the third optical pulse through the optical quantum channel.

Preferably, between the first data processing device and the second data processing device or between the first data processing device and the restricted access section, the fourth optical pulses may (continuously) propagate in the segments of the optical quantum channel containing the second backscattered radiation.

The method may further comprise at least one of:
- transmitting a fifth optical pulse from the second data processing device to the first data processing device via the optical quantum channel;
- transmitting, from the second data processing device to the first data processing device via the optical quantum channel and subsequent to transmitting the fifth optical pulse, sixth optical pulses comprising third information for quantum key distribution, wherein an intensity (and/or power) of the fifth optical pulse is greater than (average) intensities (and/or powers) of the sixth optical pulses; and
- receiving (in the second data processing device) third backscattered radiation which is backscattered from the fifth optical pulse during the propagation of the fifth optical pulse through the optical quantum channel.

Preferably, the optical quantum channel may comprise a second restricted access section adjacent to the first data processing device, the second restricted access section preferably having a path length being at least half of a path distance between the fifth optical pulse and a last of the sixth optical pulses (and preferably at most the path distance between the fifth optical pulse and a last of the sixth optical pulses).

The first data processing device and/or the second data processing device may comprise a sending unit and/or a receiving unit. The first and/or the second data processing device may comprise a (second) switching unit configured to switch between a sending state and a receiving state. The method may comprise synchronizing the sending state and the receiving state of the first and the second data processing device. For example, during transmission of at least one of the first optical pulse, the second optical pulses, the third optical pulse, and the fourth optical pulses, the first data processing device may be in a sending state and the second data processing device may be in a receiving state. During transmission of the fifth optical pulse and/or the sixth optical pulses, the first data processing device may be in a receiving state and the second data processing device may be in a sending state.

The first data processing device and/or the second data processing device may comprise at least one of a first light source configured to generate the first optical pulse, a second light source configured to generate the second optical pulses, an encoding unit configured to encode the information for quantum key distribution in the second optical pulses, a (first) switching unit configured to switch between the first and the second light source (for transmission), a detection unit for receiving the backscattered radiation, a routing unit (e.g., an optical circulator) configured to route the backscattered radiation to the detection unit, an optical detector for receiving the second optical pulses, and a classical processing unit.

The classical processing unit may comprise a classical processor and/or a classical memory. The classical processing unit may be configured to carry out classical computations and/or to control the further components of the first data processing device, in particular the encoding unit.

The first data processing device and the second data processing device may be connected by the optical quantum channel and an (authenticated) classical channel. At least one optical amplifier configured to amplify the first optical pulse and/or the second optical pulses may be arranged at the optical quantum channel. The first data processing device and the second data processing device may be remote from each other.

The intensity of the first optical pulse may be greater than (average) intensities of the second optical pulses by a factor between 10³ and 10¹⁰, preferably between 10³ and 10⁸, more preferably between 10⁵ and 10⁸. The first optical pulse may for example comprise between 10⁸ and 10¹² photons. The second optical pulses may for example each comprise between 10² and 10⁵ photons. An first optical pulse length may be between 10 ns and 1 µs. The second optical pulse length may be between 0.1 ns and 10 ns, preferably between 0.9 ns and 1.1 ns, more preferably around 1 ns. By increasing the relative intensity of the first pulse, analysis of the backscattered radiation may be facilitated.

The method may comprise transmitting a further first optical pulse via the optical quantum channel from the first data processing device to the second data processing device (or from the second data processing device to the first data processing device), the further first optical pulse having a wavelength different from a wavelength of the first optical pulse and a wavelength of the second optical pulses.

The further first optical pulse may for example be transmitted after the first optical pulse and/or before the second optical pulses. The wavelength of the first optical pulse and the wavelength of the second optical pulses may be different or, preferably, the same.

The method may further comprise determining a shared key in the first and the second data processing device based on the information for quantum key distribution and/or using quantum key distribution. In particular, the method may comprise generating a classical bit sequence (indicative of the information for quantum key distribution), preferably by a random number generator. The method may comprise generating the second optical pulses (e.g., using a laser) and/or adjusting (e.g., modulating) the second optical pulses based on the bit sequence, in particular encoding the bit sequence into the second optical pulses. The method may comprise receiving and/or measuring the second optical pulses in the second data processing device and/or determining a received bit sequence in the second data processing device. The method may further comprise performing at least one of basis reconciliation, error correction, and privacy amplification in the first data processing device and the second data processing device, in particular for establishing the shared key. The privacy amplification may be based on a determined leakage value and/or signal loss for the optical quantum channel. The leakage value may be determined from the backscattered radiation.

Embodiments related to the method for quantum key distribution can be provided correspondingly for the system for quantum key distribution. In the description of the present application, "a plurality of" means at least two, such as two or three, unless otherwise specified. In general, terms such as "first", "second", and "third" are for descriptive purposes only and should not be understood as indicating or implying relative importance or implying a quantity of indicated technical features. Embodiments as described herein regarding a first entity such as a first data processing device or a first test pulse can analogously be provided for a corresponding second entity, third entity, fourth entity, fifth entity, sixth entity, etc. In the context of this disclosure, interval information (e.g., "between ... and", "from ... to") is to be understood as including the interval ends. Further, the expression "at least one of" may also include the combination of all respective elements. The terms "include", "comprise" and "have" and any variations thereof are intended to cover non-exclusive inclusions.

### Brief description of drawings

In the following, embodiments, by way of example, are described with reference to drawings, in which:
- Fig. 1a: shows a graphical representation of a system for quantum key distribution and an eavesdropping device at a first time,
- Fig. 1b: shows a graphical representation of the system for quantum key distribution and the eavesdropping device at a second time,
- Fig. 2: shows a graphical representation of a data processing device,
- Fig. 3a: shows a graphical representation of the system for quantum key distribution and the eavesdropping device at a third time,
- Fig. 3b: shows a graphical representation of the system for quantum key distribution and the eavesdropping device at a fourth time,
- Fig. 3c: shows a graphical representation of another system for quantum key distribution and an eavesdropping device,
- Fig. 4a: shows a graphical representation of yet another system for quantum key distribution at a first time,
- Fig. 4b: shows a graphical representation of the system at a second time,
- Fig. 4c: shows a graphical representation of the system at a third time,
- Fig. 5: shows a graphical representation of a system for quantum key distribution in a bidirectional configuration, and
- Fig. 6: shows a graphical representation of method steps for determining a shared key.

### Detailed description

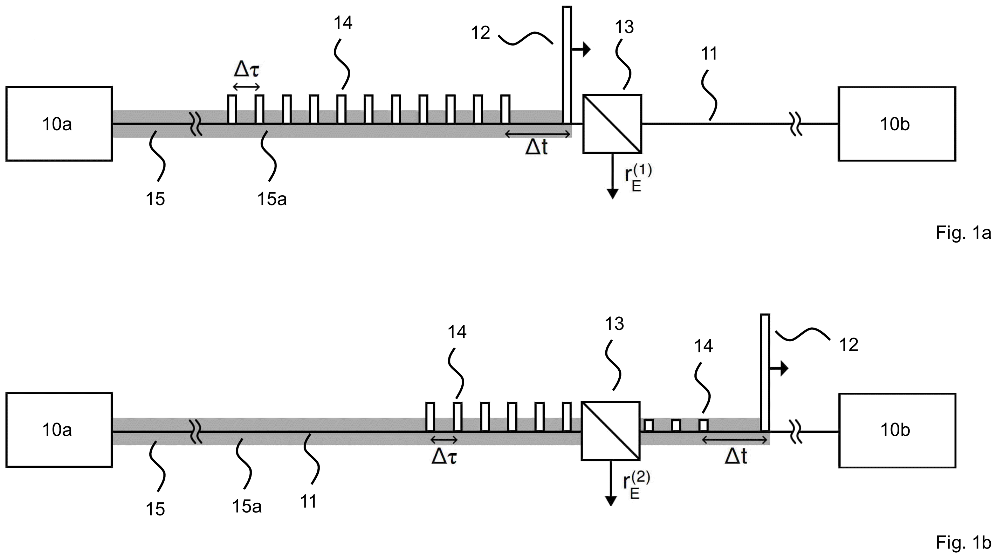

In Fig. 1a and Fig. 1b, graphical representations of a system for quantum key distribution and an eavesdropping device 13 at a first and a second time are shown. The system comprises a first data processing device 10a, a second data processing device 10b, and an optical quantum channel 11 configured to transmit optical pulses. The optical quantum channel 11 may for example comprise optical fiber. Before transmitting signal pulses (second optical pulses 14), which contain information for carrying out QKD, a test pulse (first optical pulse 12) is transmitted from the first data processing device 10a to the second data processing device 10b. The time gap Δ*t* between the first optical pulse 12 and a first of the second optical pulses 14 and the time gap Δ*τ* between subsequent second optical pulses 14 may be around 20 ns. The number of second optical pulses n may for example be 100. The time of sending a test pulse 12 may be publicly available.

The time length of a test pulse 12 can vary, e.g., from 100 ns to 1 µs. The shape of a test pulse 12 is rectangular. The wavelength of a test pulse 12 coincides with the wavelength of the signal pulses 14. Further test pulses with other wave lengths may be transmitted to estimate properties of the optical quantum channel 11 with respect to different wave lengths.

While propagating through the optical quantum channel 11, the first optical pulse 12 is scattered, thus generating backscattered radiation 15, which propagates back towards the first data processing device 10a. The backscattering takes place continuously, as is indicated by continuous gray shading in Figs. 1a and 1b. The backscattered radiation 15 is continuously detected in the first data processing device 10a.

The sequence of test pulse 12 and subsequent signal pulses 14 may be repeated until enough information has been transmitted for establishing a shared key with sufficient length between the first data processing device 10a and the second data processing device 10b. After a time period *t*₀, the first data processing device 10a transmits a next test pulse 12 (third optical pulse) and next signal pulses 14 (fourth optical pulses). The time period *t*₀ may for example be ${t}_{0} = \frac{2 {D}_{AB}}{{v}_{f}} + τ ,$ where *D*_{AB} is the path length of the optical quantum channel section between the first data processing device 10a and the second data processing device 10b, *v_{f}* is the group velocity of the light in the optical quantum channel 11 (e.g., in optical fiber) and *τ* is the processing time of incoming data in the first data processing device 10a. The term 2*D_{AB}*/*v_{f}* is the time during which a test pulse 12 reaches the end of the line and the backscattered radiation 15 from the end of the line returns to the first data processing device 10a.

During the propagation of the optical pulses 12, 14, an eavesdropping device 13 with a beam splitter and access to the optical quantum channel 11 may introduce a local leakage and, by measuring the incoming optical radiation, obtain a portion of the propagating states. If the incoming optical power or intensity significantly changes to higher values, the eavesdropper may instantly realize that a test pulse 12 propagates, i.e., physical loss control is performed. A small leakage is enough for the eavesdropper to distinguish between test pulses 12 and signal pulses 14. Then, in the eavesdropping device 13, a local leakage may be adjusted to a smaller value ${r}_{E}^{\left(1\right)}$ to pretend that less photons of the optical pulses are intercepted. As soon as signal pulses 14 are expected the eavesdropping device 13 may switch the leakage to a larger value ${r}_{E}^{\left(2\right)}$ for obtaining more information.

The legitimate users (corresponding to the first and the second data processing device 10a, 10b) will however observe the falsified leakage ${r}_{E}^{\left(1\right)}$ on the test pulses 12 and expect that the same portion is intercepted from the signal pulses 14. This attack forces the legitimate users to observe a leakage in the optical quantum channel 11 that differs from the real one ${r}_{E}^{\left(1\right)} ≪ {r}_{E}^{\left(2\right)}$ . Thus, the legitimate users will incorrectly estimate the information available to the eavesdropping device 13 and may inappropriately conduct privacy amplification. As a result, the security of the shared key may be compromised.

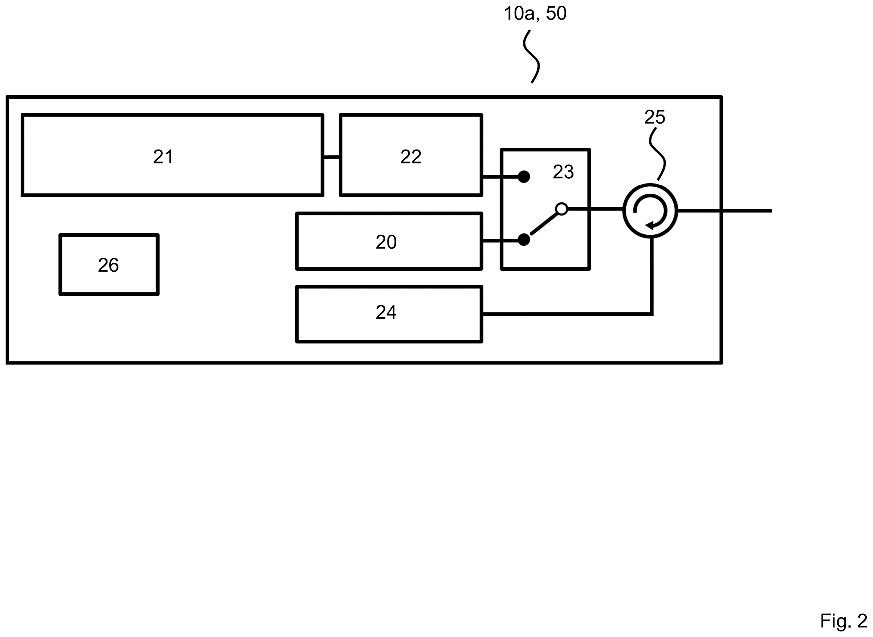

Fig. 2 shows a graphical representation of the first data processing device 10a, which in the shown embodiment comprises only a sending unit 50. The first optical pulse 12 is created using a first light source 20, e.g., a first laser, and the second optical pulses 14 are created using a second light source 21, e.g., a second laser.

The information for quantum key distribution is encoded in the second optical pulses 14 via an encoding unit 22. Depending on the employed protocol, the information may be encoded in the polarization (e.g., BB84) and/or the intensity and/or the phase of the second optical pulses 14. To this end, the encoding unit 22 may include at least one of a phase modulator, an intensity modulator, and a polarization modulator.

Transmission of the first optical pulse 12 and the second optical pulses is switched using a (first) switching unit 23. The incoming backscattered radiation 15 is received in a detection unit 24, e.g., an OTDR (optical time domain reflectometry) detector. To prevent the backscattered radiation 15 from reaching the light sources 20, 21, a routing unit 25, e.g., an optical circulator, routes the backscattered radiation to the detection unit 24. The first data processing device 10a also comprises a classical processing unit 26, e.g., including a classical processor (e.g., a CPU) and a classical memory (e.g., random access memory and/or a data storage device). The classical processing unit 26 is configured to carry out classical computations and/or to control the further components of the first data processing device 10a, in particular the encoding unit 22.

### Eavesdropping in the vicinity of the second data processing device

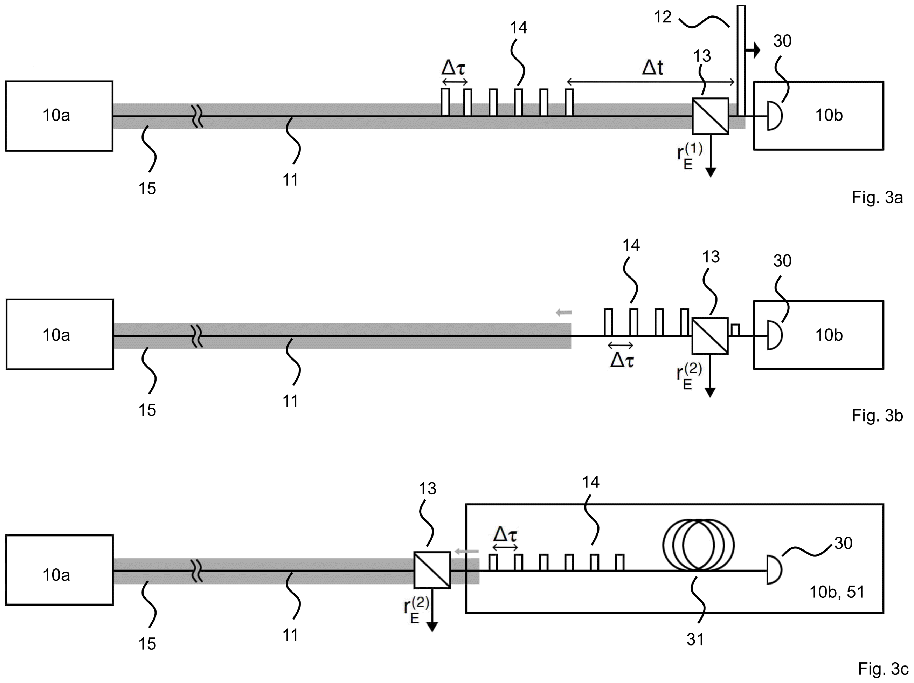

Fig. 3a and Fig. 3b show further graphical representations of the system for quantum key distribution and an eavesdropping device 13 at different times. The eavesdropping device 13 creates leakages with leakage value ${r}_{E}^{\left(1\right)}$. When the eavesdropping device 13 detects a drop of incoming optical power/intensity, it is determined that a test pulse 12 already passed the intrusion point and the leakage is increased to the higher value ${r}_{E}^{\left(2\right)}$ for obtaining more photons from the following signal pulses 14. It may be assumed that the eavesdropping device 13 can adjust the leakage value at any rate.

The backscattered radiation 15 generated between the intrusion point and the second data processing device 10b will also be affected by the higher leakage. Since the first data processing device 10a measures the backscattered radiation 15 from the test pulse 12 rather than the transmitted part, it is possible to determine the real leakage value ${r}_{E}^{\left(2\right)}$ from the backscattered radiation 15, e.g., on a line tomogram. In this case, the backscattered radiation 15 may capture the condition of the optical quantum channel 11 during the time the signal pulses 14 propagate through it.

In the example shown in Figs. 3a and 3b, the eavesdropping device 13 is arranged at an intrusion point close to the second data processing device 10b. Such a location may provide the eavesdropping device 13 with additional opportunities for intercepting information without being detected. Referring to Fig. 3a, the eavesdropper determines that a test pulse 12 passed the intrusion point but does not instantly adjust the leakage value. Instead, the eavesdropper waits until the backscattered radiation 15 from the end of the optical quantum channel 11 has passed the intrusion point. Subsequently, there is no backscattered radiation 15 that the eavesdropping device 13 can affect. This allows the eavesdropping device 13 to increase the leakage value from ${r}_{E}^{\left(1\right)}$ to ${r}_{E}^{\left(2\right)}$ and thus intercept more information. The maximum allowed distance Δ*l*₁ between the intrusion point (the location of the eavesdropping device 13) and the second data processing device 10b can be estimated as $Δ {l}_{1} = \frac{{v}_{f} Δ t}{2} .$

If the intrusion point is located not further than Δ*l*₁ from the second data processing device 10b, the eavesdropping device 13 may obtain information about each signal pulse 14. To be able to unnoticeably divert photons from at least the last (n-th) signal pulse 14, the eavesdropping device 13 must be located at the optical quantum channel 11 with a distance to the second data processing device 10b not larger than $Δ {l}_{n} = \frac{{v}_{f} Δ t}{2} + \left(n-1\right) \frac{{v}_{f} Δ τ}{2} .$

If the eavesdropping device 13 is closer to the second data processing device 10b than Δ*lₙ,* the communication may hence be considered to be insecure. If for example the group velocity in optical fiber is *v_{f}* = 2 · 10⁸ m/s, the time gap between second optical pulses 14 is Δ*τ* = 20 ns, the time gap between the first optical pulse 12, the first of the second pulses is Δ*t* = 20 ns, and the number of second optical pulses 14 (in one sequence) is *n* = 100, the corresponding length is Δ*lₙ* = 200 m. The dependence of the group velocity in optical fiber on the wavelength may be considered to be negligible.

### Countering eavesdropping in the vicinity of the second data processing device

Referring to Fig. 3c, for the eavesdropping device 13 to still be detectable from the backscattered radiation 15, a restricted access section 31 of the optical quantum channel, to which the eavesdropping device 13 has no access, is provided. The restricted access section 31 may for example be included in the second data processing device 10b, in particular in the form of a fiber coil. The restricted access section has at least a path length for the first optical pulse 12 propagating and generating the backscattered radiation 15 such that, between the first data processing device 10a and the second data processing device 10b or between the first data processing device 10a and the restricted access section 31, the second optical pulses propagate in segments of the optical quantum channel 11 containing the backscattered radiation 15. In particular, the path length of the restricted access section may be at least Δ*lₙ* = (*v_{f}*Δ*t +* (*n -* 1)*v_{f}*Δ*τ*)/2.

Thus, no intrusion may take place at the last Δ*lₙ* meters before the second data processing device 10b and an attack with leakage falsification in the vicinity of the second data processing device 10b is prevented. In other words, the additional secured path length forces the eavesdropper to divert photons within portions of the optical quantum channel 11 which contain backscattered radiation 15.

In conclusion, the parallel loss control and restricted access section 31 allows the legitimate users to detect attacks in which an eavesdropping device 13 distinguishes between the first optical pulse 12 and second optical pulses 14 and aims to imitate the real leakage value. Such attacks are now detectable across the entire optical quantum channel 11 since the eavesdropping device 13 alters the backscattered radiation 15 when trying to adjust the leakage value. Due to the restricted access section 31, the eavesdropping device 13 cannot conduct the attack in the vicinity of the second data processing device 10b without being detected. Hence, the proposed solution is considered to be in the class of device-dependent (DD) QKD protocols. The main assumption of DD-QKD is the inability of an eavesdropper to enter the laboratories of legitimate users. In addition, an eavesdropper is not able to enter the restricted access section 31.

### Restricted access section outside a section between the first and the second data processing device

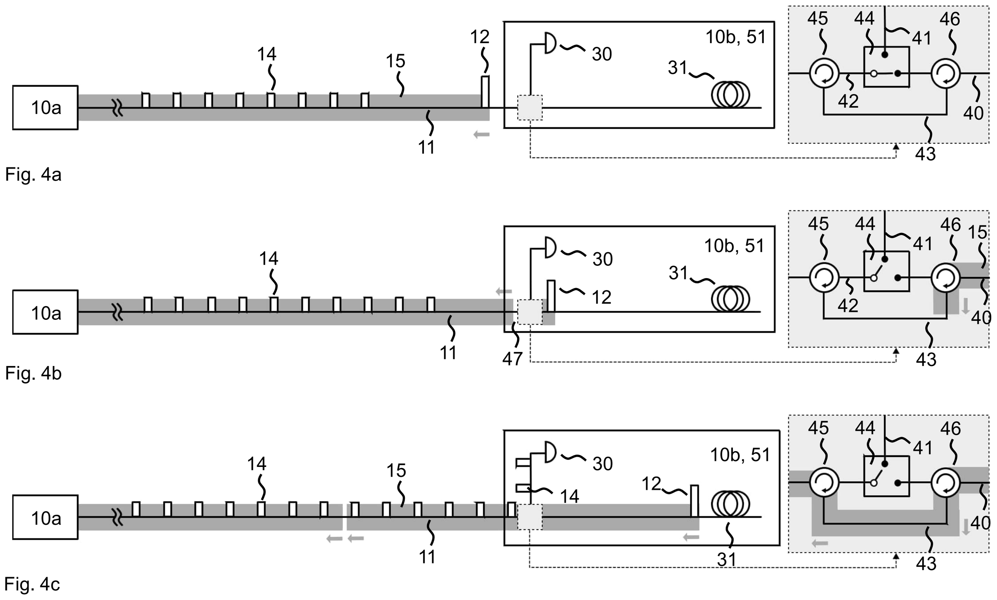

Increasing the path length between the first data processing device 10a and the second data processing device 10b generally leads to additional losses. To minimize such losses, the restricted access section 31 may also be provided outside a section between the first data processing device 10a and the second data processing device 10b (cf. Figs. 4a, 4b, and 4c).

Referring to Fig. 4a, a first optical pulse 12 enters the second data processing device 10b (in particular the receiving unit 51) and subsequently passes through a first optical circulator 45 to an optical switch segment 42 containing an optical switch 44. The first optical circulator 45 and a subsequent second optical circulator 46 are configured such that incoming radiation is routed to a next branch in a clockwise direction. Initially, the optical switch 44 is in a state such that incoming pulses are routed towards a first branch 40 of the optical quantum channel 11 comprising the restricted access section 31. After the first optical pulse 12 passes the second optical circulator 46, the optical switch 44 is switched such that incoming pulses are routed towards a second branch 41 of the optical quantum channel 11 comprising an optical detector 30 for receiving the second optical pulses 14. The first optical pulse 12 propagates through the first branch 40, which as opposed to the second branch 41 is not connected to the optical detector 30. The backscattered radiation 15 from the first optical pulse 12 propagates through the second optical circulator 46 and the first optical circulator 45 via a bypass branch 43 bypassing the optical switch 44 (see Fig. 4b and Fig. 4c). At the same time, the second optical pulses 14 propagate via the first optical circulator 45 and the optical switch 44 to the optical detector 30. The end of the first branch 40 is isolated from outside radiation.

While the first optical pulse 12 propagates in the optical switch segment 42 between the first optical circulator 45 and the second optical circulator 46, no backscattered radiation 15 propagates back towards the subsequent second optical pulses 14, since it cannot escape the chain of the first optical circulator 45, the second optical circulator 46, and the optical switch 44. Thus, there is a time gap 47 in the backscattered radiation 15 as indicated in Figs. 4b and 4c. The time gap 47 depends on the time the first optical pulses 12 requires passing both optical circulators 45, 46. For a length of the optical switch segment 42 being *L* = 1 cm and taking into account the time the backscattered radiation 15 requires propagating through the bypass branch 43, the time gap *δt* in the backscattered radiation 15 is $δt = \frac{2 L}{{v}_{f}} = \frac{2 cm}{2 ⋅ {10}^{8} m / s} = 0.01 ns .$

Hence, the time gap *δt* = 0.01 ns is two orders of magnitude smaller than the pulse length of a second optical pulse, which is typically 1 ns. As a result, the eavesdropper will always have to carry out leakage falsification attacks in the presence of the backscattered radiation 15, thus being detectable by the legitimate users from the backscattered radiation 15.

The path length of the restricted access section 31 is determined as follows. The whole sequence of bit-encoding second optical pulses 14 must propagate in a fiber channel simultaneously with the backscattered radiation 15. The minimal path length *l* of the restricted access section 31 may be determined from the time when the radiation backscattered from the end of the restricted access section 31 leaves the second data processing device 10b and the last (*n*-th) of the second optical pulses 14 enters the second data processing device 10b. Thus, the minimal path length is half the distance between the first optical pulse 12 and the last (n-th) of the second optical pulses 14, i.e., *l* ≥ (*v_{f}*Δ*t* + (*n -* 1)*v_{f}*Δ*τ*)/2.

Thus, the minimum path length of the restricted access section 31 is the same for the restricted access section 31 being arranged between the first and the second data processing device 10a, 10b or outside thereof. For *n* = 100, *Δt* = 20 ns and *Δτ =* 20 ns, the minimum path length is *l* ≥ 200 m.

To decide whether to arrange the restricted access section 31 between the first and the second data processing device 10a, 10b or outside thereof, the losses caused by the additional fiber and the losses occurring in the optical switch 44 and the optical circulators 45, 46 may be compared. Typical losses occurring in the optical switch 44 and the optical circulators 45, 46 are about 0.8 dB for each element. Thus, the total loss additional to the channel loss influencing the second optical pulses 14 is about 31% of the intensity of the second optical pulses 14. The same additional loss occurs in the arrangement between the first and the second data processing device 10a, 10b if the additional fiber has a length of 8 km. This length is enough to securely transmit *n* = 2000 second optical pulses 14 (for Δ*t* = Δ*τ* = 20 ns). As a result, for roughly *n* ≥ 2000, the circulator-based scheme may be preferable, since in this case, less additional losses are produced. Depending on Δ*t* and Δ*τ,* as well as the parameters of the optical circulators 45, 46 and the optical switch 44, different thresholds for n may apply.

### Bidirectional configuration

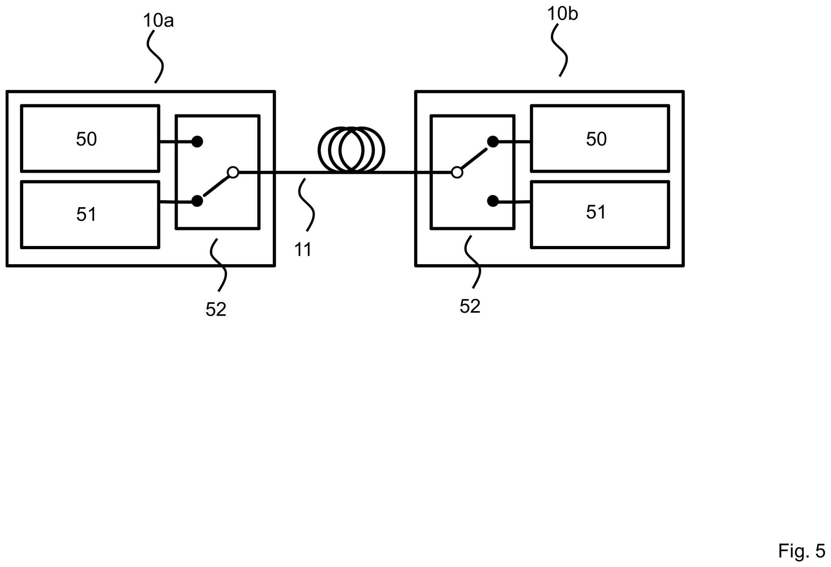

Fig. 5 shows a graphical representation of the system for quantum key distribution in a bidirectional configuration. The first data processing device 10a and the second data processing device 10b can both comprise a sending unit 50 and a receiving unit 51. The sending unit 50 can be designed as shown in Fig. 2 and the receiving unit can be designed as in Fig. 3c or Fig. 4a. The first and the second data processing device 10a, 10b have a (second) switching unit 52 using which the device can be switched to a receiving status or a sending state. The legitimate users agree (publicly) on who will be a receiver and who will be a sender in a next key generation interval. After such an agreement, the switching units 52 of the first and the second data processing device 10a, 10b are synchronized: If the switching unit 52 of the first data processing device 10a is in a receiving state, the switching unit 52 of the second data processing device 10b is in a sending state and vice versa.

### Quantum key distribution

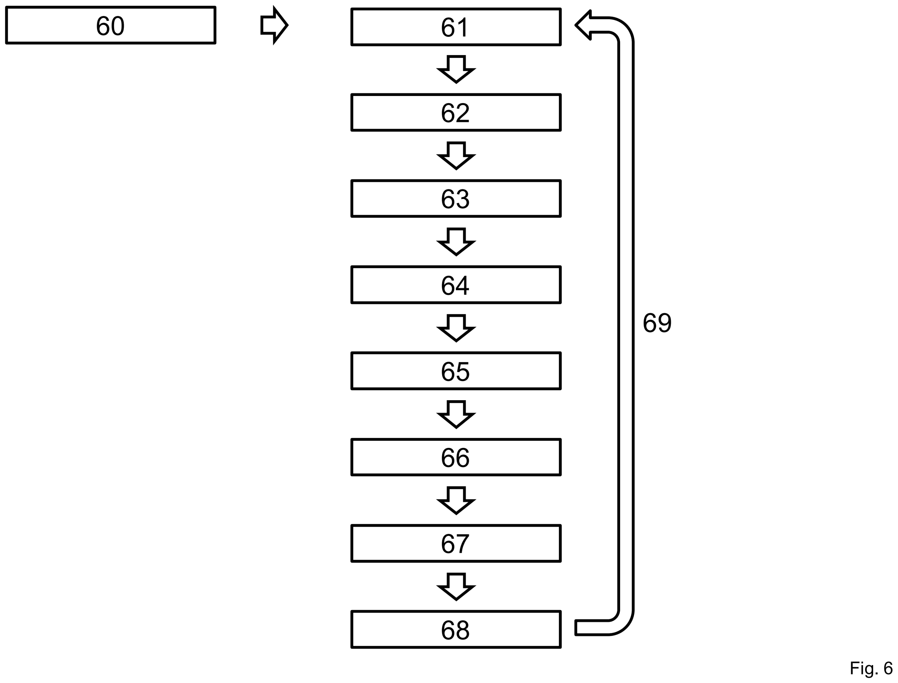

A shared key between the first and the second data processing device may be determined by QKD as follows (cf. Fig. 6). In this example, the first data processing device 10a will represent the transmitting device, while the second data processing device 10b will represent the receiving device.

In an initial step 60, an initial loss profile of the optical quantum channel 11 is determined, which essentially represents the natural signal losses in the optical quantum channel 11. The initial loss profile may be shared between the first and the second data processing device 10a, 10b via the classical channel.

In a first step 61, as part of physical loss control, a first optical pulse 12 (test pulse) is transmitted from the first data processing device 10a to the second data processing device 10b. As the first optical pulse 12 propagates through the optical quantum channel 11, backscattered radiation 15 propagates back to and is received by the first data processing device 10a. A loss profile may be determined from backscattered radiation of the first optical pulse 12 and, preferably, subsequent test pulses. The loss profile may indicate position-dependent losses and/or position-dependent leakages. The loss profile may be shared between the first and the second data processing device 10a, 10b via the classical channel.

By comparing the thus updated loss profile with the initial loss profile, a fraction *r_{E}* of the signal possibly seized by an eavesdropper may be determined. For example, if, in a section of the transmission line not comprising optical amplifiers, the natural signal losses in this section are represented by *r*₀ and the eavesdropper intercepts an intercepted fraction *r_{E}* of the signal, then the intercepted fraction *r_{E}* can be derived from total losses *rₜ* via the following relation: (1 *- rₜ*) = (1 - *r_{E}*)(1 - *r*₀).

If the intercepted fraction *r_{E}* grows too large, so that the legitimate users lose their informational advantage over the eavesdropper, the protocol is terminated. Termination of the protocol depends on the length of the optical quantum channel 11. The protocol may in particular be terminated if an effective key rate is below a target key rate value.

In a second step 62, using a random number generator, a bit sequence of sequence length n is determined in the first data processing device 10a.

In a third step 63, the bit sequence is encoded into a quantum signal comprising a series of n second optical pulses 14, which are transmitted to the second data processing device 10b. The signal bits 0 and 1 may for example respectively correspond to coherent states |*γ*₀〉 and |*γ*₁〉. The particular way of encoding 0 and 1 signal bits into parameters of the coherent states |γ₀〉 and |*γ*₁〉 may vary. For example, the signal bits may be encoded into coherent light pulses with different intensities and same phases or into coherent light pulses with same intensities and different phases.

In a fourth step 64, the second optical pulses 14 may be amplified by one or more optical amplifiers provided along the optical quantum channel 11. The optical amplifiers may be provided equidistantly along the optical quantum channel 11. Each optical amplifier compensates natural signal losses up along the optical quantum channel 11 from a preceding optical amplifier up until the respective optical amplifier.

In a fifth step 65, the second optical pulses 14 are received and measured by the second data processing device 10b, in particular the optical detector 30. A corresponding received bit sequence is determined in the second data processing device 10b.

In a sixth step 66, inconclusive signal bits, which correspond to quantum measurements in the second data processing device 10b determined as inconclusive, are discarded from the bit sequence in the first data processing device 10a and the received bit sequence in the second data processing device 10b. To this end, bit positions of the inconclusive signal bits are transmitted via the classical channel from the second data processing device 10b to the first data processing device 10a.

In a seventh step 67, by disclosing a part of the bit sequence and/or the received bit sequence via the classical channel, an error rate may be determined and error correction may be performed on the bit sequence and the received bit sequence by the first data processing device 10a and the second data processing device 10b, respectively. The error correction maybe carried out employing, e.g., low-density parity-check (LDPC) codes. As a result, an error corrected bit sequence is determined in the first and the second data processing device 10a, 10b.

In an eighth step 68, a final key sequence (amplified key sequence) is determined from the error corrected bit sequence using privacy amplification. The final key sequence is shorter than the error corrected bit sequence and any potential eavesdropper has none or negligibly small information on the final key sequence. The final key sequence represents the shared key between the first and the second data processing device 10a, 10b as a result of quantum key distribution.

The steps from the first step 61 to the eighth step 68 may be repeated (arrow 69) and the amplified key sequences concatenated to a (total) shared key until a total length of the shared key is as large as required by the application at hand.

The features disclosed in this description, the figures, and the claims may be material for the realization of various embodiments, taken in isolation or in various combinations thereof.

### List of reference numbers

- 10a: first data processing device
- 10b: second data processing device
- 11: optical quantum channel
- 12: first optical pulse
- 13: eavesdropping device
- 14: second optical pulses
- 15: backscattered radiation
- 15a: gray shading
- 20: first light source
- 21: second light source
- 22: encoding unit
- 23: first switching unit
- 24: detection unit
- 25: routing unit
- 30: optical detector
- 31: restricted access section
- 40: first branch
- 41: second branch
- 42: optical switch segment
- 43: bypass branch
- 44: optical switch
- 45: first optical circulator
- 46: second optical circulator
- 50: sending unit
- 51: receiving unit
- 52: second switching unit
- 60-69: steps for determining a shared key

## Claims

1. Method for quantum key distribution in a system which comprises a first data processing device (10a) and a second data processing device (10b), the method comprising:
- transmitting a first optical pulse (12) via an optical quantum channel (11) from the first data processing device (10a) to the second data processing device (10b);
- transmitting second optical pulses (14) from the first data processing device (10a) to the second data processing device (10b) via the optical quantum channel (11) and subsequent to transmitting the first optical pulse (12), wherein the second optical pulses (14) comprise information for quantum key distribution and wherein an intensity of the first optical pulse (12) is greater than intensities of the second optical pulses (14); and
- receiving backscattered radiation (15) which is backscattered from the first optical pulse (12) during propagation of the first optical pulse (12) through the optical quantum channel (11);
wherein the optical quantum channel (11) further comprises a restricted access section (31) adjacent to the second data processing device (10b), the restricted access section (31) having a path length being at least half of a path distance between the first optical pulse (12) and a last of the second optical pulses (14).

2. The method of claim 1, wherein the restricted access section (31) extends between the first and the second data processing device (10b) or outside a portion between the first and the second data processing device (10b).

3. The method of claim 1 or 2, wherein between the first data processing device (10a) and the second data processing device (1ob) or between the first data processing device (10a) and the restricted access section (31), the second optical pulses (14) continuously propagate in segments of the optical quantum channel (11) containing the backscattered radiation (15).

4. The method of any one of the preceding claims, wherein the restricted access section (31) comprises an optical fiber coil.

5. The method of any one of the preceding claims, wherein a time gap between the first optical pulse (12) and a first of the second optical pulses (14) is between 1 ns and 1 µs.

6. The method of any one of the preceding claims, further comprising determining a fraction of signal power diverted by an eavesdropping device (13) based on the backscattered radiation (15).

7. The method of claim 6, wherein the fraction of diverted signal power is determined by optical time domain reflectometry.

8. The method of any one of the preceding claims, further comprising:
- in the second data processing device (10b), routing the first optical pulse (12) to a first branch (40) of the optical quantum channel (11) comprising the restricted access section (31);
- in the second data processing device (10b), routing the second optical pulses (14) to a second branch (41) of the optical quantum channel (11) comprising an optical detector (30);
wherein the backscattered radiation (15) from the first optical pulse (12) in the first branch (40) is routed towards the first data processing device (10a).

9. The method of claim 8, wherein
- the first optical pulse (12) and the second optical pulses (14) are routed by an optical switch (44) and
- the backscattered radiation (15) is routed towards the first data processing device (10a) via a bypass branch (43) bypassing the optical switch (44).

10. The method of claim 9, wherein the backscattered radiation (15) is routed via the bypass branch (43) by a first optical circulator (45) and a second optical circulator (46) between which the optical switch (44) and the bypass branch (43) are arranged.

11. The method of any one of the preceding claims, further comprising:
- transmitting a third optical pulse from the first data processing device (10a) to the second data processing device (1ob) via the optical quantum channel (11) and subsequent to transmitting the second optical pulses (14);
- transmitting fourth optical pulses from the first data processing device (10a) to the second data processing device (1ob) via the optical quantum channel (11) and subsequent to transmitting the third optical pulse, wherein the fourth optical pulses comprise second information for quantum key distribution, wherein an intensity of the third optical pulse is greater than intensities of the fourth optical pulses; and
- receiving second backscattered radiation which is backscattered from the third optical pulse during the propagation of the third optical pulse through the optical quantum channel (11).

12. The method of any one of the preceding claims, further comprising:
- transmitting a fifth optical pulse from the second data processing device (10b) to the first data processing device (10a) via the optical quantum channel (11);
- transmitting sixth optical pulses from the second data processing device (10b) to the first data processing device (10a) via the optical quantum channel (11) and subsequent to transmitting the fifth optical pulse, wherein the sixth optical pulses comprise third information for quantum key distribution, wherein an intensity of the fifth optical pulse is greater than intensities of the sixth optical pulses; and
- receiving third backscattered radiation which is backscattered from the fifth optical pulse during the propagation of the fifth optical pulse through the optical quantum channel (11);
wherein the optical quantum channel (11) further comprises a second restricted access section adjacent to the first data processing device (10a), the second restricted access section having a path length being at least half of a path distance between the fifth optical pulse and a last of the sixth optical pulses.

13. The method of any one of the preceding claims, wherein the intensity of the first optical pulse (12) is greater than intensities of the second optical pulses (14) by a factor between 10³ and 10⁸.

14. The method of any one of the preceding claims, further comprising transmitting a further first optical pulse (12) via the optical quantum channel (11) from the first data processing device (10a) to the second data processing device (10b), the further first optical pulse (12) having a wavelength different from a wavelength of the first optical pulse (12) and a wavelength of the second optical pulses (14).

15. System for quantum key distribution, the system comprising a first data processing device (10a) and a second data processing device (10b) and being configured to carry out the method of any one of the preceding claims.
